# EUROPEAN PATENT APPLICATION

(11) **EP 4 628 435 A1**
(43) Date of publication of application: **08.10.2025**
(21) Application number: 23952067.9
(22) Date of filing: 04.12.2023
(51) Int. Cl.: B65G 47/91, B65G 61/00, B65G 59/04, B25J 15/06, B25J 15/00

(54) **SIDE-SUCTION BOTTOM-SUPPORTING FIXTURE FOR LOADING AND UNLOADING ROBOT AND LOADING AND UNLOADING ROBOT**

(30) Priority: 12.09.2023 CN 202311172333
(71) Applicant: Xyz Robotics China Inc., Shanghai 201108 (CN)
(72) Inventor: KANG, Zaochen, Shanghai 201108 (CN); ZHOU, Jiaji, Shanghai 201108 (CN); XU, Qing, Shanghai 201108 (CN)
(74) Representative: FRKelly
(86) International application number: PCT/CN2023/136049
(87) International publication number: WO 2025/055144

(57) **Abstract**

A side suction and bottom supporting gripper for a loading-unloading robot and a loading-unloading robot, include: a gripper body, where both of a first guide rail and second guide rail extend in a length direction of the gripper body; a suction pad structure, which is provided with a sucker array thereon, where the sucker array is used to suck a target box, the suction pad structure is connected to the first guide rail through a first slider and is slidable along the first guide rail; a bottom supporting mechanism, which is located on a bottom side of the gripper body, where the bottom supporting mechanism is connected to the second guide rail through a second slider and is slidable along the second guide rail; and an actuator module, which is connected to the suction pad structure and the bottom supporting mechanism through a driving transmission mechanism.

## Description

### TECHNICAL FIELD

The present disclosure relates to industrial robots and, in particular, to a side suction and bottom supporting gripper for a loading-unloading robot, and a loading-unloading robot.

### BACKGROUND

The industrial robots are intelligent devices equipped with sensors, objective lens and electro-optical systems, which can quickly sort and transport materials.

More and more visual sensors and force sensors will be used in the industrial robots, and the industrial robots will become increasingly intelligent. With the advancement of sensing and identification systems, artificial intelligence, and other technologies, robots have evolved from being controlled unidirectionally to storing and applying data on their own, thereby gradually becoming informationized.

When sorting and transporting materials through an industrial robot, it is necessary to collect images of the materials through a visual sensor, and identify the images of the materials to determine postures thereof, and then the industrial robot sorts or transports the materials through its mounted gripper or suckers.

When using an industrial robot to unload materials in containers with borders, top plates and partition layers, such as material boxes, shelves and roll cages, due to a limitation that the materials should be fetched at side surfaces, grippers in a sorting scenario such as palletizing and de-palletizing would easily escape from the materials due to the gravitational pull of the materials while being applied to this scenario, and they are easy to wear and damage.

### SUMMARY

The present disclosure aims to provide a side suction and bottom supporting gripper for a loading-unloading robot, and a loading-unloading robot. The side suction and bottom supporting gripper for the loading-unloading robot according to the present disclosure includes:
a gripper body;
a suction pad structure provided with a sucker array thereon, where the sucker array is used to suck a target box, and the suction pad structure is provided on a side surface of the gripper body and is movable in a first direction;
a bottom supporting mechanism, which is located on the gripper body, and which is movable in a second direction opposite to the first direction; and
an actuator module, which is connected to the suction pad structure and the bottom supporting mechanism through a driving transmission mechanism, and which is used to drive the suction pad structure and the bottom supporting mechanism to move in opposite directions simultaneously.

In an implementation, when the suction pad structure grips the target box by applying suction, the actuator module drives the suction pad structure to move from a front end of the gripper body to a rear end of the gripper body, and the bottom supporting mechanism protrudes from the front end of the gripper body; and
when releasing the target box, the actuator module drives the suction pad structure to move from the rear end of the gripper body to the front end of the gripper body to push out the target box, while the bottom supporting mechanism retracts into the gripper body.

In an implementation, the gripper body includes a supporting base structure and a vertical installation plate;
the vertical installation plate is connected to a rear end of the supporting base structure; the actuator module is provided on the vertical installation plate;
one side surface of the supporting base structure is provided with a first guiding mechanism, and the other side surface is provided with a second guiding mechanism; and
the bottom supporting mechanism is provided between the first guiding mechanism and the second guiding mechanism.

In an implementation, the driving transmission mechanism includes: a driving wheel, a driven wheel, and a transmission belt;
the driving wheel is provided on an output shaft of the actuator module;
the driven wheel is provided at a front end of the suction pad structure; the driving wheel is connected to the driven wheel through the transmission belt; and
the suction pad structure is connected to one side of the transmission belt, and the bottom supporting mechanism is connected to the other side of the transmission belt.

In an implementation, the suction pad structure includes: a sucker mounting pad and a first moving plate;
the first moving plate is connected to the first guiding mechanism, and is connected to one side of the transmission belt through a first fixing plate; and
the sucker mounting pad is provided on the first moving plate, and the sucker array is provided on the first moving plate.

In an implementation, the supporting base structure includes a first supporting frame, a second supporting frame, and a connecting crossbar;
rear ends of the first supporting frame and the second supporting frame are connected to two side ends of the vertical installation plate; and front ends of the first supporting frame and the second supporting frame are connected to two ends of the connecting crossbar.

In an implementation, the bottom supporting mechanism includes a first bottom supporting rod, a second bottom supporting rod, and a second moving plate;
where the first bottom supporting rod and the second bottom supporting rod are provided on the second moving plate; the second moving plate is connected to the second guiding mechanism and is movable along the second guiding mechanism; and
the second moving plate is connected to the other side of the transmission belt through a second fixing plate.

In an implementation, the first guiding mechanism includes a first guide rail and a first slider; the second guiding mechanism includes a second guide rail and a second slider;
the first guide rail is located on one side surface of the gripper body, and the second guide rail is located on the other side surface of the gripper body; and
the suction pad structure is connected to the first guide rail through the first slider and is slidable along the first guide rail; the bottom supporting mechanism is connected to the second guide rail through the second slider and is slidable along the second guide rail.

In an implementation, the sucker array includes a first sucker array and a second sucker array;
the first sucker array is provided on the suction pad structure; the second sucker array is connected to a back side surface of the first sucker array or the suction pad structure through a sucker connection plate;
and the first sucker array is located on one side of the bottom supporting mechanism, and the second sucker array is located on the other side of the bottom supporting mechanism.

In an implementation, the first sucker array includes a first sucker region and a second sucker region arranged adjacent to each other; and
the first sucker region and the second sucker region are used to provide suction separately or simultaneously to suck target boxes of different sizes at side surfaces.

In an implementation, the first sucker array and the second sucker array are used to cooperate with each other to form a suction surface when moving to the front end of the gripper body, to simultaneously suck a target box of a first size at a side surface, at this time, the bottom supporting mechanism is free from supporting the target box;
the first sucker array is used for suction of a target box of a second size at a side surface;
the second sucker array is used for suction of a target box of a third size on a side surface, and capable of being protected from interference with a top of a material box; and
where the side surface of the target box of the first size, the side surface of the target box of the second size, and the side surface of the target box of the third size decrease in area sequentially.

In an implementation, the side suction and bottom supporting gripper for the loading-unloading robot further includes: a vacuum source and a three-way valve;
where the first sucker region is provided with a first suction channel; the second sucker region is provided with a second suction channel; and
the vacuum source is in communication with the first suction channel and the second suction channel through the three-way valve, for providing suction to both the first sucker region and the second sucker region simultaneously, or providing suction to the first sucker region or the second sucker region separately.

The side suction and bottom supporting gripper for the loading-unloading robot provided in the present disclosure includes:
a gripper body;
a suction pad structure provided with a sucker array thereon, where the sucker array is used to suck a target box, and the suction pad structure is provided on a side surface of the gripper body and is movable in a first direction;
a bottom supporting mechanism, which is located on the gripper body, and which is movable in a second direction opposite to the first direction;
a first driving unit, which is used to drive the suction pad structure to move in the first direction; and
a second driving unit, which is used to drive the bottom supporting mechanism to move in the second direction, where the suction pad structure and the bottom supporting mechanism move in opposite directions.

The loading-unloading robot provided in the present disclosure includes the side suction and bottom supporting gripper for the loading-unloading robot, and further includes a robotic manipulator and a mobile base;

where the side suction and bottom supporting gripper for the loading-unloading robot is provided at an end of the robotic manipulator; and
the robotic manipulator is provided on the mobile base, and the mobile base is used to drive the robotic manipulator to move.

The gripper body in the present disclosure is provided with a first guide rail and a second guide rail extending in a length direction. The first guide rail is located on one side surface of the gripper body, and the second guide rail is located on the other side surface of the gripper body. The suction pad structure is connected to the first guide rail through a first slider and is slidable along the first guide rail. The bottom supporting mechanism is connected to the second guide rail through a second slider and is slidable along the second guide rail. When the sucker array provided on the suction pad structure sucks a target box, the suction pad structure is driven by the actuator module to move towards the rear end of the gripper body to achieve the fetching of the target box. At the same time, the actuator module drives the bottom supporting mechanism to protrude from the front end of the gripper body to support the target box. Therefore, loading, unloading, palletizing and de-palletizing of boxes can be achieved in environments with limited space such as containers.

### BRIEF DESCRIPTION OF DRAWINGS

In order to provide a clearer explanation to the technical solutions in the embodiments of the present disclosure or the prior art, a brief introduction will be given hereunder to the accompanying drawings required for the description of the embodiments or the prior art. It is obvious that the accompanying drawings described below are only embodiments of the present disclosure. For those ordinarily skilled in the art, other drawings can be obtained based on the provided drawings without creative labor. By reading the detailed description of non-limiting embodiments with reference to the following figures, other features, objectives, and advantages of the present disclosure will become more apparent.
FIG. 1 is a schematic state diagram of a side suction and bottom supporting gripper for a loading-unloading robot according to an embodiment of the present disclosure.
FIG. 2 is another schematic state diagram of a side suction and bottom supporting gripper for a loading-unloading robot according to an embodiment of the present disclosure.
FIG. 3 is a schematic diagram of a working state of a side suction and bottom supporting gripper for a loading-unloading robot according to an embodiment of the present disclosure.
FIG. 4 is a schematic state diagram of a side suction and bottom supporting gripper for a loading-unloading robot according to a variant embodiment of the present disclosure.
FIG. 5 is another schematic state diagram of a side suction and bottom supporting gripper for a loading-unloading robot according to a variant embodiment of the present disclosure.
FIG. 6 is a schematic structural diagram of a suction pad structure according to an embodiment of the present disclosure.
FIG. 7 shows a schematic diagram of an installation relationship of a moving plate according to an embodiment of the present disclosure.
FIG. 8 shows a schematic structural diagram of a gripper body according to an embodiment of the present disclosure.
FIG. 9 is a schematic diagram of a bottom side of a side suction and bottom supporting gripper for a loading-unloading robot according to an embodiment of the present disclosure.
FIG. 10 is a schematic diagram of a working state of a second sucker array according to a variant embodiment of the present disclosure.
FIG. 11 is a schematic structural diagram of a loading-unloading robot according to an embodiment of the present disclosure.

In the figures:
1-Gripper body; 101-Vertical installation plate; 102-First supporting frame; 103-Second supporting frame; 104-Connecting crossbar; 2-Suction pad structure; 201-Sucker mounting pad; 202-First moving plate; 203-First slider; 204-First guide rail; 3-Bottom supporting mechanism; 301-First bottom supporting rod; 302-Second bottom supporting rod; 303-Second slider; 304-First fixing plate; 305-Second moving plate; 306-Second guide rail; 4-Actuator module; 5-First sucker array; 601-Transmission belt; 602-Driven wheel; 603-Driving wheel; 604-Second fixing plate; 7-Second sucker array; 100-Side suction and bottom supporting gripper for the loading-unloading robot; 200-Robotic manipulator; 300-Mobile base.

### DESCRIPTION OF EMBODIMENTS

A detailed explanation of the present disclosure will be provided below in conjunction with specific embodiments. The following embodiments will help those skilled in the art further understand the present disclosure, but do not limit the present disclosure in any form. It should be pointed out that for those ordinarily skilled in the art, several modifications and improvements can be made without departing from the disclosed concept. These are all within the protection scope of the present disclosure.

The terms "first", "second", "third", "fourth", etc. (if any) in the description, the claims, and the accompanying drawings of the present disclosure are intended to distinguish similar objects and do not necessarily describe a specific order or sequence. It should be understood that data used in this way can be interchanged in appropriate circumstances, so that the embodiments described herein can be implemented in an order other than those illustrated or described herein. In addition, the terms "including" and "having", as well as any variations thereof, are intended to cover non-exclusive inclusions, for example, processes, methods, systems, products, or devices that contain a series of steps or units are not necessarily limited to those steps or units that are clearly listed, but may include other steps or units that are not clearly listed or inherent to these processes, methods, products, or devices.

The following provides a detailed explanation to the disclosed technical solution through specific embodiments. The following specific embodiments can be combined with each other, and the same or similar concepts or processes may not be repeated in some embodiments.

With specific embodiments, detailed explanations are given hereunder to the disclosed technical solution and how the technical solution of the present application solves the above technical problems. The following specific embodiments can be combined with each other, and the same or similar concepts or processes may not be repeated in some embodiments. The following will describe the embodiments disclosed herein in conjunction with the accompanying drawings.

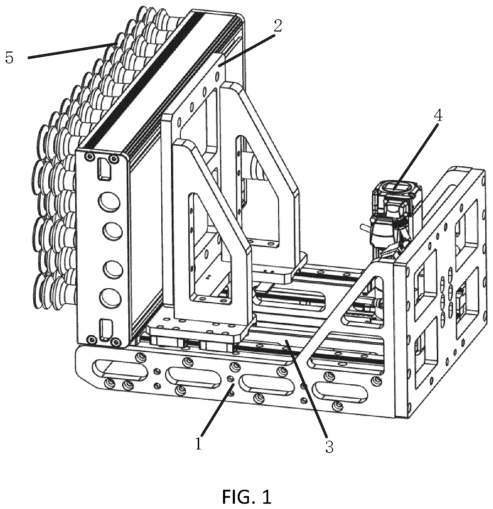

As shown in FIG. 1 to FIG. 11, the side suction and bottom supporting gripper for the loading-unloading robot provided in the disclosure includes:
a gripper body 1, where both of a first guide rail 204 and a second guide rail 306 extend in a length direction of the gripper body 1, where the first guide rail 204 is located on one side surface of the gripper body 1, and the second guide rail 306 is located on the other side surface of the gripper body 1;
a suction pad structure 2 provided with a first sucker array 5 thereon, where the first sucker array 5 is used to suck a target box, and the suction pad structure 2 is connected to the first guide rail 204 through a first slider 203 and is slidable along the first guide rail 204;
a bottom supporting mechanism 3, which is located on a bottom side of the gripper body 1, and which is connected to the second guide rail 306 through a second slider 303 and is slidable along the second guide rail 306; and
an actuator module 4, which is connected to the suction pad structure 2 and the bottom supporting mechanism 3 through a driving transmission mechanism, and which is used to drive the suction pad structure 2 and the bottom supporting mechanism 3 to move in opposite directions simultaneously.

In an embodiment of the present disclosure, the actuator module 4 is provided on a vertical installation plate 101 of the gripper body 1. The actuator module 4 adopts a driving motor or cylinder.

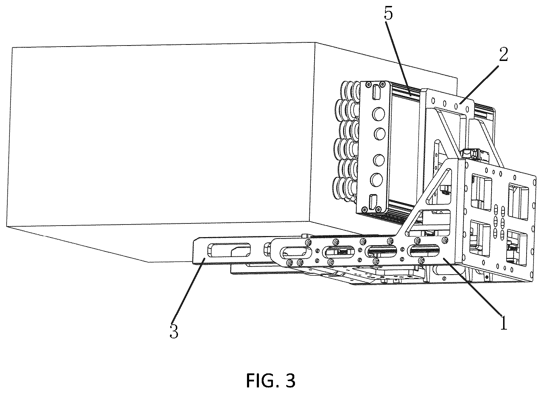

FIG. 1 is a schematic state diagram of a side suction and bottom supporting gripper for a loading-unloading robot according to an embodiment of the present disclosure. FIG. 3 is a schematic diagram of a working state of a side suction and bottom supporting gripper for a loading-unloading robot according to an embodiment of the present disclosure. As shown in FIG. 1 and FIG. 3, when the suction pad structure 2 sucks the target box, the actuator module 4 drives the suction pad structure 2 to move from a front end of the gripper body 1 to a rear end of the gripper body 1, and the bottom supporting mechanism 3 protrudes from the front end of the gripper body 1.

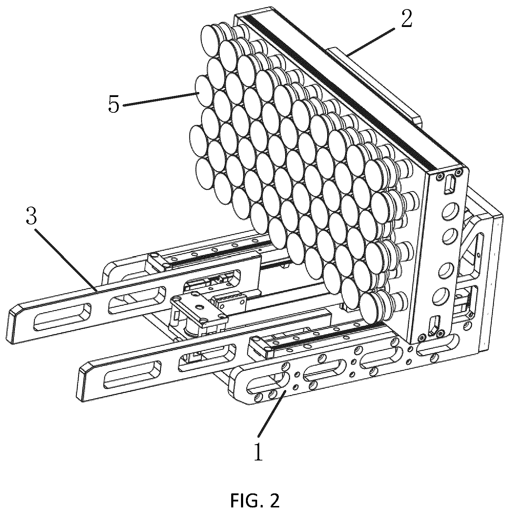

FIG. 2 is another schematic state diagram of a side suction and bottom supporting gripper for a loading-unloading robot according to an embodiment of the present disclosure. As shown in FIG. 2, when releasing the target box, the actuator module 4 drives the suction pad structure 2 to move from the rear end of the gripper body 1 to the front end of the gripper body 1 to push out the target box, while the bottom supporting mechanism 3 retracts into the gripper body 1.

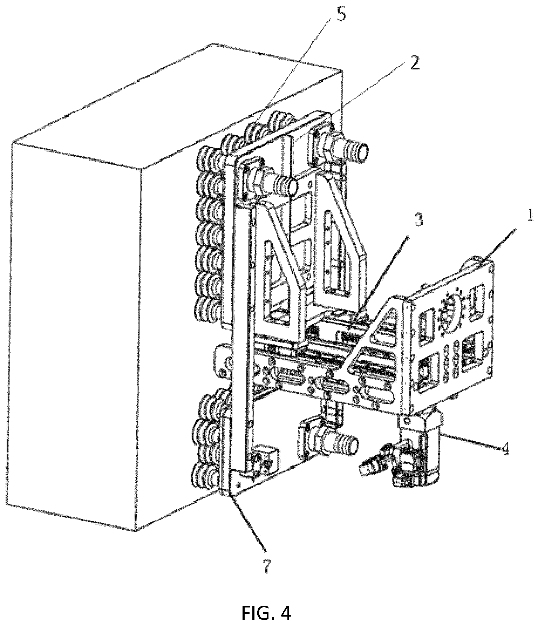

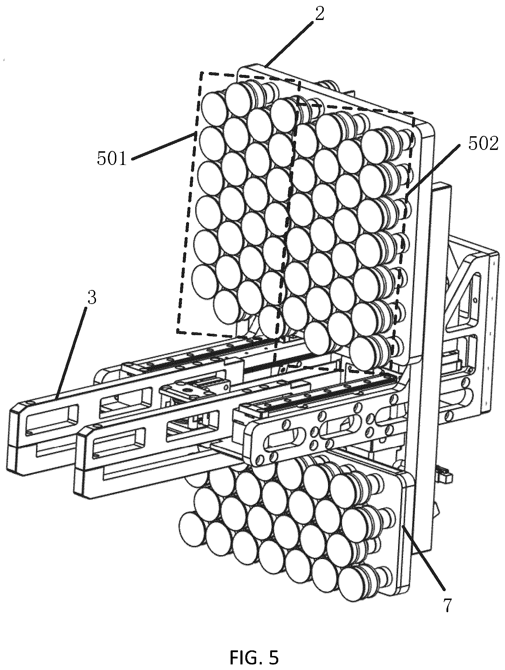

FIG. 4 is a schematic state diagram of a side suction and bottom supporting gripper for a loading-unloading robot according to a variant embodiment of the present disclosure. FIG. 5 is another schematic state diagram of a side suction and bottom supporting gripper for a loading-unloading robot according to a variant embodiment of the present disclosure. As shown in FIG. 4 and FIG. 5, the sucker array includes a first sucker array 5 and a second sucker array 7.

The first sucker array 5 is provided on the suction pad structure 2. The second sucker array 7 is connected to a back side surface of the first sucker array or the suction pad structure through a sucker connection plate.

The first sucker array 5 is located on one side of the bottom supporting mechanism 3, and the second sucker array 7 is located on the other side of the bottom supporting mechanism 3.

In an embodiment of the present disclosure, the first sucker array 5 is used for suction of a target box with larger area, and the second sucker array 7 is used for suction of a target box with smaller area.

When the target box is sucked by the first sucker array 5, the bottom supporting mechanism 3 supports the target box towards the side surface of the first sucker array 5. When the target box is sucked by the second sucker array 7, the bottom supporting mechanism 3 supports the target box towards the side surface of the second sucker array 7.

In an embodiment of the present disclosure, the first sucker array 5 and the second sucker array 7 have the same width, but a height of the first sucker array 5 is greater than that of the second sucker array 7.

By using the second sucker array 7 to suck the target box, it is also possible to avoid interference between the gripper and a top of a material box when loading and unloading materials inside the material box through the loading-unloading robot.

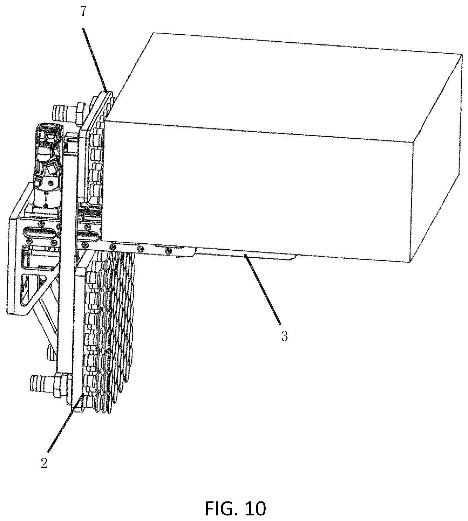

When the height of the target box is less than that of the first sucker array 5, the second sucker array 7 can be used to suck the target box, as shown in FIG. 10.

In this variant embodiment, the bottom supporting mechanism 3 is provided with an accommodating channel extending in a length direction, so that the movement of the bottom supporting mechanism 3 can be protected from being blocked by the connecting crossbar 104 in the gripper body 1 when the bottom supporting mechanism 3 slides along the second guide rail 306.

A groove can also be provided at a front end of the connecting crossbar 104, so that when the bottom supporting mechanism 3 is retracted, the front end can be accommodated in the groove, shortening a length of the entire gripper.

The first sucker array 5 and the second sucker array 7 are in the same plane, and the first sucker array 5 and the second sucker array 7 can cooperate to perform suction on the side surface of the target box with maximum area, for example, top suction on the target box.

In an embodiment of the present disclosure and modified variant embodiment, the first sucker array 5 includes a first sucker region 501 and a second sucker region 502 arranged adjacent to each other.

The first sucker region 501 and the second sucker region 502 are used to provide suction separately for suction of a target box of one size at a side surface or simultaneously provide suction for suction of a target box of another size at a side surface.

Through partitioned control over the first sucker array 5, it is possible to suck a target box at a side surface with small area, that is, through separate control over the first sucker region 501 or the second sucker region 502, suction on a side surface of a target box with a certain area is performed, avoiding traction on adjacent target boxes. At this time, the area of the first sucker region 501 or the second sucker region 502 is smaller than that of the suction surface of the target box.

In an embodiment of the present disclosure, as shown in FIG. 5, the first sucker region 501 and the second sucker region 502 have the same height, but the width of the first sucker region 501 and the second sucker region 502 is smaller than that of the first sucker array 5. Therefore, they can be used to suck target boxes with a width smaller than that of the first sucker region 501 and the second sucker region 502.

The first sucker region 501 is provided with a first suction channel, and the second sucker region 502 is provided with a second suction channel. Two vacuum generators or vacuum sources can be arranged to provide suction to the first sucker region and the second sucker region 502 respectively, or one vacuum generator or vacuum source can be arranged to communicate with the first suction channel and the second suction channel through a three-way valve, to simultaneously provide suction to the first sucker region 501 and the second sucker region 502, or provide suction to the first sucker region or the second sucker region 502 respectively.

The three-way valve is a three-way check valve.

When suction is provided simultaneously to the first sucker region 501 and the second sucker region 502, it is possible to perform suction on a side surface of a target box with another area, that is, suction on a side surface of a target box with larger area.

The first sucker region 501 and the second sucker region 502 are located on a left side and a right side of the first sucker array 5, and in a variant embodiment, they can also be located on an upper side and a lower side of the first sucker array 5.

In a word, whether to choose the first sucker array 5 and the second sucker array 7 or the first sucker region 501 and the second sucker region 502, it depends on the area of the side surface of the target box being sucked. Generally, the sucker region needs to be located inside the side surface being sucked and is able to provide sufficient suction to suck the target box up.

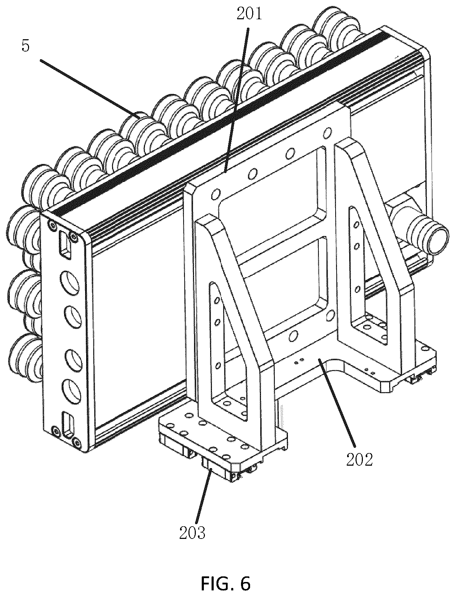

FIG. 6 is a schematic structural diagram of a suction pad structure according to an embodiment of the present disclosure. As shown in FIG. 6, the suction pad structure 2 includes a sucker mounting pad 201 and a first moving plate 202.

The first moving plate 202 is connected to the first guide rail 204 through the first slider 203, and is connected to one side of the transmission belt 601 through a first fixing plate 304.

The sucker mounting pad 201 is provided on the first moving plate 202, and the first sucker array 5 is provided on the first moving plate 202.

The sucker mounting pad 201 includes a first supporting frame, a second supporting frame, and a mounting pad. The first supporting frame and the second supporting frame are provided on the first moving plate 202, and the mounting pad is installed on front side surfaces of the first supporting frame and the second supporting frame.

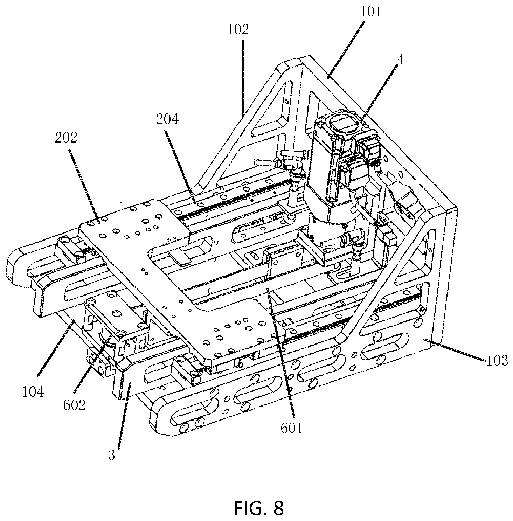

In an embodiment of the present disclosure, as shown in FIG. 8, the first guide rail 204 includes a first left guide rail and a first right guide rail. The first slider 206 can be the entire slider that simultaneously connects the first left guide rail and the first right guide rail, or it can be provided as two sub sliders that respectively cooperate with the first left guide rail and the first right guide rail.

The first left guide rail and the first right guide rail are parallel to each other.

In an embodiment of the present disclosure, the first sucker array 5 includes multiple suckers arranged in sequence, each column of multiple suckers arranged in sequence are in a staggered arrangement. The number of suckers in each column is 10, and the number of columns of suckers is 6.

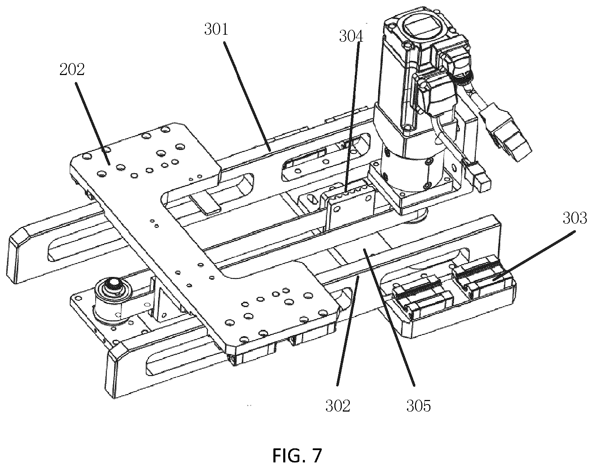

FIG. 7 shows a schematic diagram of an installation relationship of a moving plate according to an embodiment of the present disclosure. As shown in FIG. 7, the bottom supporting mechanism 3 includes a first bottom supporting rod 301, a second bottom supporting rod 302, and a second moving plate 305.

The first bottom supporting rod 301 and the second bottom supporting rod 302 are provided on the second moving plate 305. The second moving plate 305 is connected to the second guide rail 306 through the second slider 303 and is slidable along the second guide rail 306.

The second moving plate 305 is connected to the other side of the transmission belt 601 through the second fixing plate 604.

In an embodiment of the present disclosure, the first bottom supporting rod 301 and the second bottom supporting rod 302 are parallel to each other and perpendicular to the second moving plate 305.

In an embodiment of the present disclosure, the second guide rail 306 includes a second left guide rail and a second right guide rail. The second slider 303 can be the entire slider that simultaneously connects the second left guide rail and the second right guide rail, or it can be provided as two sub sliders that cooperate with the second left guide rail and the second right guide rail respectively.

The second left guide rail and the second right guide rail are parallel to each other.

FIG. 8 shows a schematic structural diagram of a gripper body according to an embodiment of the present disclosure. As shown in FIG. 8, the gripper body 1 includes a supporting base structure and a vertical installation plate 101.

The vertical installation plate 101 is connected to the rear end of the supporting base structure. The actuator module 4 is provided on the vertical installation plate 101.

One side surface of the supporting base structure is provided with the first guide rail 204, and the other side surface of the supporting base structure is provided with the second guide rail 306.

The bottom supporting mechanism 3 is provided between the first guide rail 204 and the second guide rail 306.

In an embodiment of the present disclosure, the vertical installation plate 101 is perpendicular to the supporting base structure.

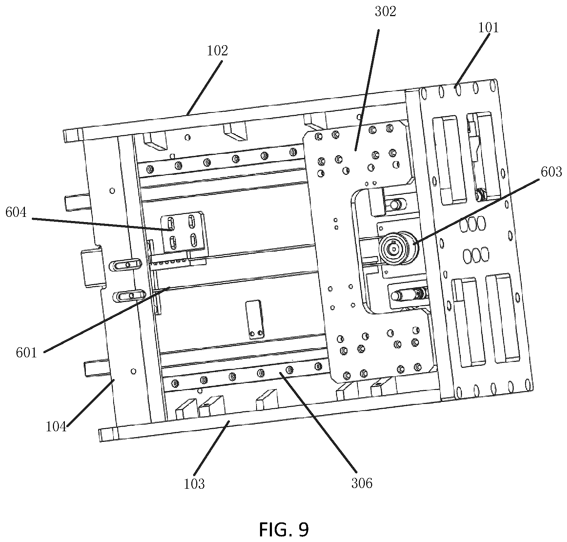

FIG. 9 is a schematic diagram of a bottom side surface of a side suction and bottom supporting gripper for a loading-unloading robot according to an embodiment of the present disclosure. As shown in FIG. 8 and FIG. 9, the driving transmission mechanism includes a driving wheel 603, a driven wheel 602, and a transmission belt 601.

The driving wheel 603 is provided on an output shaft of the actuator module 4.

The driven wheel 602 is provided at the front end of the suction pad structure 2. The driving wheel 603 is connected to the driven wheel 602 through the transmission belt 601;
The suction pad structure 2 is connected to one side of the transmission belt 601, and the bottom supporting mechanism 3 is connected to the other side of the transmission belt 601.

In an embodiment of the present disclosure, the actuator module 4 is connected to the driving wheel 603 through a reducer to drive the driving wheel 603 to rotate. The driven wheel 602 is provided in the middle area of the connecting crossbar 104, and is connected to the connecting crossbar 104 through a synchronous wheel mounting plate. The synchronous wheel mounting plate is provided with four supporting rods, and the top of the supporting rods is provided with a synchronous wheel cover plate. The synchronous wheel cover plate and the four support rods form a protective cover for the driven wheel 602.

As shown in FIG. 9, the supporting base structure includes a first supporting frame 102, a second supporting frame 103, and a connecting crossbar 104.

Rear ends of the first supporting frame 102 and the second supporting frame 103 are connected to two side ends of the vertical installation plate 101. Front ends of the first supporting frame 102 and the second supporting frame 103 are connected to the two ends of the connecting crossbar 104.

In an embodiment of the present disclosure, the first supporting frame 102, the second supporting frame 103, the connecting crossbar 104 and the vertical installation plate 101 enclose a rectangular structure.

An upper side surface of the first supporting frame 102 is provided with a first right guide rail, and a lower side surface is provided with a second right guide rail. An upper side surface of the second supporting frame 103 is provided with a first left guide rail, and a lower side surface is provided with a second left guide rail.

In a variant embodiment of the present disclosure, the side suction and bottom supporting gripper for the loading-unloading robot provided in the present disclosure includes:
a gripper body 1, where both of a first guide rail 204 and a second guide rail 306 extend in a length direction of the gripper body 1, where the first guide rail 204 is located on one side surface of the gripper body 1, and the second guide rail 306 is located on the other side surface of the gripper body 1;
a suction pad structure 2 provided with a first sucker array 5 thereon, where the first sucker array 5 is used to suck a target box, and the suction pad structure 2 is connected to the first guide rail 204 through a first slider 203 and is slidable along the first guide rail 204;
a bottom supporting mechanism 3, which is located on a bottom side of the gripper body 1, and which is connected to the second guide rail 306 through a second slider 303 and is slidable along the second guide rail 306;
a first driving unit, which is used to drive the suction pad structure 2 to move along a first guide rail 204; and
a second driving unit, which is used to drive the bottom supporting mechanism 3 to move along the second guide rail 306, where the suction pad structure 2 and the bottom supporting mechanism 3 move in opposite directions.

In the variant embodiment, the suction pad structure 2 and the bottom supporting mechanism 3 are driven by different driving units. The suction pad structure 2 and the bottom supporting mechanism 3 can be controlled, by a controller, to move in opposite directions simultaneously, or the suction pad structure 2 can also be controlled to move several seconds before the bottom supporting mechanism 3, or the suction pad structure 2 can also be controlled to move several seconds later than the bottom supporting mechanism 3. The several seconds can be any one of 1 to 3 seconds, such as two seconds.

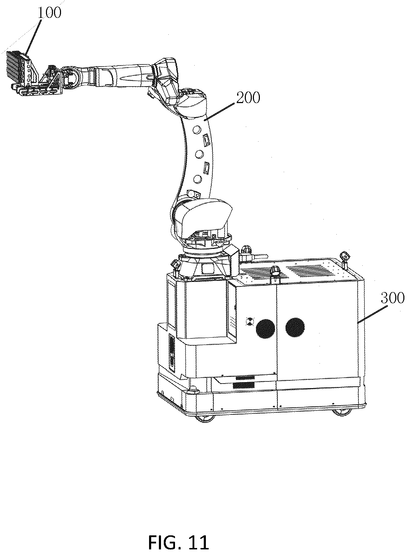

FIG. 11 is a schematic structural diagram of a loading-unloading robot according to an embodiment of the present disclosure. As shown in FIG. 11, the loading-unloading robot provided in the present disclosure includes the side suction and bottom supporting gripper for the loading-unloading robot, and further includes a robotic manipulator and a mobile base;
where the side suction and bottom supporting gripper for the loading-unloading robot is provided at an end of the robotic manipulator;
the robotic manipulator is provided on the mobile base, and the mobile base is used to drive the robotic manipulator to move.

When using the loading-unloading robot provided in the present disclosure to unload the target box, the following steps are included:
step S1: control the suction pad structure 2 to move to the front end of the gripper body 1 to suck a target box at a side surface;
step S2: control the actuator module 4 to drive the suction pad structure 2 to move from the front end of the gripper body 1 to the rear end of the gripper body 1, while the bottom supporting mechanism 3 protrudes from the front end of the gripper body 1 to support the target box; and
step S3: control the actuator module 4 to drive the suction pad structure 2 to move from the rear end of the gripper body 1 to the front end of the gripper body 1, to push out the target box, while the bottom supporting mechanism 3 retracts into the gripper body 1.

More specifically, the following steps are included:
obtain a stack image of a box stack, identify the stack image, and determine multiple target box regions on the stack image;
based on positions of the multiple target box regions, determine multiple target boxes to be sucked, and further determine length and height of the target boxes;
when it is determined based on the length and the height that the length and width of a to-be-sucked side surface of a target box are greater than the length and width of the plane formed by the first sucker array 5 and the second sucker array 7, the target box is sucked by both the first sucker array 5 and the second sucker array 7. At this time, there is no need for the bottom supporting mechanism 3 to protrude out to support the target box;
when the height of the to-be-sucked side surface is greater than the height of the first sucker array 5 and the length of the to-be-sucked side surface is greater than the length of the first sucker array 5, the target box is sucked by the first sucker array 5;
when the height of the to-be-sucked side surface is less than the height of the first sucker array 5 and the length of the to-be-sucked side surface is greater than the length of the first sucker array 5, the target box is sucked by the second sucker array 7; and
when the height of the to-be-sucked side surface is greater than the height of the first sucker array 5 and the length of the to-be-sucked side surface is less than the length of the first sucker array 5, the target box is sucked by the first sucker region 501 or the second sucker region 502 of the first sucker array 5.

In addition, when loading and unloading materials in the material box through the loading-unloading robot, if there is interference in the suction of the target box by the first sucker array 5, the target box is sucked by the second sucker array 7.

In an embodiment of the present disclosure, the gripper body in the present disclosure is provided with a first guide rail and a second guide rail extending in a length direction. The first guide rail is located on one side surface of the gripper body, and the second guide rail is located on the other side surface of the gripper body. The suction pad structure is connected to the first guide rail through a first slider and is slidable along the first guide rail. The bottom supporting mechanism is connected to the second guide rail through a second slider and is slidable along the second guide rail. When the sucker array provided on the suction pad structure sucks a target box, the suction pad structure is driven by the actuator module to move towards the rear end of the gripper body to achieve the fetching of the target box. At the same time, the actuator module drives the bottom supporting mechanism to protrude from the front end of the gripper body to support the target box. Therefore, loading, unloading, palletizing and de-palletizing of boxes can be achieved in environments with limited space such as containers.

The various embodiments in the present specification are described in a progressive manner, with each embodiment emphasizing its differences from other embodiments. Cross reference can be made to the embodiments for the same and similar parts therebetween. The above description of the disclosed embodiments enables those skilled in this field to implement or use the present disclosure. Various modifications to these embodiments will become apparent to those skilled in the art, and the general principles defined in this article can be implemented in other embodiments without departing from the spirit or scope of the present disclosure. Therefore, the present disclosure will not be limited to the embodiments shown herein, but will be within the widest scope consistent with the principles and novel features disclosed herein.

The specific embodiments of the present disclosure have been described above. It should be understood that the present disclosure is not limited to the specific embodiments described above. Those skilled in the art may make various modifications or alterations within the scope of the claims, which does not affect the substantive content of the present disclosure.

## Claims

1. A side suction and bottom supporting gripper for a loading-unloading robot, comprising:
a gripper body;
a suction pad structure provided with a sucker array thereon, wherein the sucker array is used to suck a target box, and the suction pad structure is provided on a side surface of the gripper body and is movable in a first direction;
a bottom supporting mechanism, which is located on the gripper body, and which is movable in a second direction opposite to the first direction; and
an actuator module, which is connected to the suction pad structure and the bottom supporting mechanism through a driving transmission mechanism, and which is used to drive the suction pad structure and the bottom supporting mechanism to move in opposite directions simultaneously.

2. The side suction and bottom supporting gripper for the loading-unloading robot according to claim 1, wherein when the suction pad structure grips the target box by applying suction, the actuator module drives the suction pad structure to move from a front end of the gripper body to a rear end of the gripper body, and the bottom supporting mechanism protrudes from the front end of the gripper body; and
when releasing the target box, the actuator module drives the suction pad structure to move from the rear end of the gripper body to the front end of the gripper body to push out the target box, while the bottom supporting mechanism retracts into the gripper body.

3. The side suction and bottom supporting gripper for the loading-unloading robot according to claim 1, wherein the gripper body comprises a supporting base structure and a vertical installation plate;
the vertical installation plate is connected to a rear end of the supporting base structure; the actuator module is provided on the vertical installation plate;
one side surface of the supporting base structure is provided with a first guiding mechanism, and the other side surface is provided with a second guiding mechanism; and
the bottom supporting mechanism is provided between the first guiding mechanism and the second guiding mechanism.

4. The side suction and bottom supporting gripper for the loading-unloading robot according to claim 1, wherein the driving transmission mechanism comprises: a driving wheel, a driven wheel, and a transmission belt;
the driving wheel is provided on an output shaft of the actuator module;
the driven wheel is provided at a front end of the suction pad structure; the driving wheel is connected to the driven wheel through the transmission belt; and
the suction pad structure is connected to one side of the transmission belt, and the bottom supporting mechanism is connected to the other side of the transmission belt.

5. The side suction and bottom supporting gripper for the loading-unloading robot according to claim 3, wherein the suction pad structure comprises: a sucker mounting pad and a first moving plate;
the first moving plate is connected to the first guiding mechanism, and is connected to one side of the transmission belt through a first fixing plate; and
the sucker mounting pad is provided on the first moving plate, and the sucker array is provided on the first moving plate.

6. The side suction and bottom supporting gripper for the loading-unloading robot according to claim 3, wherein the supporting base structure comprises a first supporting frame, a second supporting frame, and a connecting crossbar;
rear ends of the first supporting frame and the second supporting frame are connected to two side ends of the vertical installation plate; and front ends of the first supporting frame and the second supporting frame are connected to two ends of the connecting crossbar.

7. The side suction and bottom supporting gripper for the loading-unloading robot according to claim 6, wherein the bottom supporting mechanism comprises a first bottom supporting rod, a second bottom supporting rod, and a second moving plate;
the first bottom supporting rod and the second bottom supporting rod are provided on the second moving plate; the second moving plate is connected to the second guiding mechanism and is movable along the second guiding mechanism; and
the second moving plate is connected to the other side of the transmission belt through a second fixing plate.

8. The side suction and bottom supporting gripper for the loading-unloading robot according to claim 3, wherein the first guiding mechanism comprises a first guide rail and a first slider; the second guiding mechanism comprises a second guide rail and a second slider;
the first guide rail is located on one side surface of the gripper body, and the second guide rail is located on the other side surface of the gripper body; and
the suction pad structure is connected to the first guide rail through the first slider and is slidable along the first guide rail; the bottom supporting mechanism is connected to the second guide rail through the second slider and is slidable along the second guide rail.

9. The side suction and bottom supporting gripper for the loading-unloading robot according to claim 1, wherein the sucker array comprises a first sucker array and a second sucker array;
the first sucker array is provided on the suction pad structure; the second sucker array is connected to a back side surface of the first sucker array or the suction pad structure through a sucker connection plate; and
the first sucker array is located on one side of the bottom supporting mechanism, and the second sucker array is located on the other side of the bottom supporting mechanism.

10. The side suction and bottom supporting gripper for the loading-unloading robot according to claim 9, wherein the first sucker array comprises a first sucker region and a second sucker region arranged adjacent to each other; and
the first sucker region and the second sucker region are used to provide suction separately or simultaneously to suck target boxes of different sizes at side surfaces.

11. The side suction and bottom supporting gripper for the loading-unloading robot according to claim 9, wherein the first sucker array and the second sucker array are used to cooperate with each other to form a suction surface when moving to the front end of the gripper body, to simultaneously suck a target box of a first size at a side surface, at this time, the bottom supporting mechanism is free from supporting the target box;
the first sucker array is used for suction of a target box of a second size at a side surface;
the second sucker array is used for suction of a target box of a third size at a side surface, and is capable of being protected from interference with a top of a material box; and
wherein the side surface of the target box of the first size, the side surface of the target box of the second size, and the side surface of the target box of the third size decrease in area sequentially.

12. The side suction and bottom supporting gripper for the loading-unloading robot according to claim 10, further comprising: a vacuum source and a three-way valve;
wherein the first sucker region is provided with a first suction channel; the second sucker region is provided with a second suction channel; and
the vacuum source is in communication with the first suction channel and the second suction channel through the three-way valve, for providing suction to both the first sucker region and the second sucker region simultaneously, or providing suction to the first sucker region or the second sucker region separately.

13. A side suction and bottom supporting gripper for a loading-unloading robot, comprising:
a gripper body;
a suction pad structure provided with a sucker array thereon, wherein the sucker array is used to suck a target box, and the suction pad structure is provided on a side surface of the gripper body and is movable in a first direction;
a bottom supporting mechanism, which is located on the gripper body, and which is movable in a second direction opposite to the first direction;
a first driving unit, which is used to drive the suction pad structure to move in the first direction; and
a second driving unit, which is used to drive the bottom supporting mechanism to move in the second direction, wherein the suction pad structure and the bottom supporting mechanism move in opposite directions.

14. A loading-unloading robot, comprising a side suction and bottom supporting gripper for a loading-unloading robot according to claim 1, and further comprising a robotic manipulator and a mobile base;
wherein the side suction and bottom supporting gripper for the loading-unloading robot is provided at an end of the robotic manipulator; and
the robotic manipulator is provided on the mobile base, and the mobile base is used to drive the robotic manipulator to move.
